# EUROPEAN PATENT SPECIFICATION

(11) **EP 3 750 729 B1**
(45) Date of publication and mention of the grant of the patent: **07.06.2023**
(21) Application number: 19750537.3
(22) Date of filing: 29.01.2019
(51) Int. Cl.: B60K 1/00, H02K 5/04, B60K 17/08, H02K 7/116, B60K 11/02, B60K 11/06, F16H 41/30, F16H 57/04

(54) **POWER ASSEMBLY AND VEHICLE PROVIDED WITH SAME**
ANTRIEBSAGGREGAT UND DAMIT AUSGESTATTETES FAHRZEUG
ENSEMBLE DE PUISSANCE ET VÉHICULE EN ÉTANT POURVU

(30) Priority: 12.02.2018 CN 201820254888 U; 12.02.2018 CN 201810146303
(43) Date of publication of application: 16.12.2020
(73) Proprietor: BYD Company Limited, Guangdong 518118 (CN)
(72) Inventor: CHEN, Guangquan, Shenzhen, Guangdong 518118 (CN); CHEN, Daqi, Shenzhen, Guangdong 518118 (CN); LIU, Chunlei, Shenzhen, Guangdong 518118 (CN); JING, Shuanghong, Shenzhen, Guangdong 518118 (CN)
(74) Representative: DehnsGermany Partnerschaft von Patentanwälten
(86) International application number: PCT/CN2019/073567
(87) International publication number: WO 2019/154163

(56) References cited:
- CN-A- 106 515 405
- CN-A- 106 515 405
- CN-A- 107 554 262
- CN-U- 201 792 742
- CN-U- 208 190 391
- DE-A1-102015 214 309
- JP-A- 2001 039 174
- JP-B2- 5 939 351
- US-A1- 2017 346 366

## Description

### FIELD

This application relates to the field of vehicle manufacturing technologies, and specifically, to an electric assembly and a vehicle having the electric assembly.

### BACKGROUND

A motor assembly, a transmission assembly and a controller assembly individually disposed are used in a vehicle in the related art. The motor assembly and the transmission assembly are connected together through a bolt. Box assemblies at connection locations have relatively large wall thicknesses and waste space, there are many and bulky components, the loss is high, each assembly occupies a relatively large space, the structure is insufficiently compact, mounting and maintenance are difficult, costs are relative relatively high, and the entire mass is large, which affects the endurance capability of the entire vehicle.

JP 5 939351 B2 discloses features falling under the preamble of claim 1. DE 10 2015 214309 A1 is further prior art.

### SUMMARY

This application aims to resolve at least one of the technical problems existing in the prior art. For this purpose, this application proposes an electric assembly, where the electric assembly has advantages such as a compact structure and a good cooling effect.

The invention is defined by the independent claims.

This application further provides a vehicle having the electric assembly.

To achieve the foregoing objective, according to an embodiment of a first aspect of this application, an electric assembly is proposed. The electric assembly includes: a box assembly, where an mounting plate is disposed in the box assembly, and the mounting plate divides a space within the box assembly into a motor holding cavity and a transmission holding cavity; a motor, where the motor is disposed in the motor holding cavity; a transmission, where the transmission is disposed in the transmission holding cavity, and the motor is power-coupled to the transmission; and a cooling device, where the cooling device is disposed in the motor holding cavity and cools the box assembly. The electric assembly further includes a controller, where the controller is mounted outside the box assembly and fixedly connected to the box assembly.

Additionally, the electric assembly according to the foregoing embodiment of this application may further have the following additional technical characteristics:

According to an embodiment of this application, the mounting plate is constructed as a part of the box assembly, and the cooling device cools the box assembly through the mounting plate.

According to an embodiment of this application, the cooling device is a liquid cooling device, a motor cooling liquid passage is disposed in the motor holding cavity, and the liquid cooling device transports cooling liquid to the mounting plate and the motor through the motor cooling liquid passage.

According to an embodiment of this application, a transmission cooling liquid passage is disposed in the transmission holding cavity, the transmission cooling liquid passage is in communication with the motor cooling liquid passage, and the transmission cooling liquid passage transports the cooling liquid to the transmission.

According to another embodiment of this application, the cooling device is a blower, the blower is disposed in the motor holding cavity, and the blower performs air supply on the mounting plate and the motor.

According to an embodiment of this application, a maximum distance between the motor and the mounting plate is less than a preset distance.

According to an embodiment of this application, a side of the mounting plate facing the motor or the transmission is provided with ribs.

According to an embodiment of this application, the ribs divide a space between the mounting plate and the motor into a plurality of cavities.

According to an embodiment of this application, the ribs include an annular rib extending along a circumferential direction of the motor.

According to an embodiment of this application, the ribs include strip-shaped ribs extending along a radial direction of the motor, there are a plurality of strip-shaped ribs and the plurality of strip-shaped ribs are spaced apart along a circumferential direction of the mounting plate.

According to an embodiment of this application, heights of the strip-shaped ribs relative to the mounting plate gradually decrease from inside to outside.

According to an embodiment of this application, the box assembly includes a transmission box and a motor box, the transmission box includes a front box and a rear box, the motor box includes a motor housing and a motor backend cover, the front box and the motor housing are disposed adjacent to each other, and the mounting plate is constructed as a part of the front box or a part of the motor housing.

According to an embodiment of this application, the front box and the motor housing are integrally formed or detachably connected.

According to an embodiment of this application, the box assembly includes a transmission box and a motor box, the transmission box includes a front box and a rear box, the motor box includes a motor frontend cover, a motor housing and a motor backend cover, and the mounting plate is constructed as a part of the front box or a part of the motor frontend cover.

According to an embodiment of this application, the motor housing, the motor frontend cover and the front box are integrally formed or each two of the motor housing, the motor frontend cover and the front box are detachably connected.

According to an embodiment of this application, the motor frontend cover and the front box are integrally formed, and the motor housing and the motor frontend cover are detachably connected.

According to an embodiment of this application, the motor frontend cover and the motor housing are integrally formed, and the motor frontend cover and the front box are detachably connected.

According to an embodiment of this application, one or more of a first connection rib, a second connection rib and a third connection rib are connected between an outer surface of the front box and an outer surface of the motor housing, the first connection rib is connected between an upper end face of the motor housing and an upper end face of the front box, the second connection rib is connected between a lower end face of the motor housing and a lower end face of the front box, and the third connection rib is located between the first connection rib and the second connection rib.

According to an embodiment of this application, the electric assembly further includes a conductive sheet, where the conductive sheet is configured to connect the controller and the motor.

According to an embodiment of this application, the electric assembly further includes a conductive sheet, where the conductive sheet is stuck in the controller or the conductive sheet is fixed to the controller through a bolt.

According to an embodiment of a second aspect of this application, a vehicle is proposed. The vehicle includes the electric assembly according to the embodiment of the first aspect of this application.

In the vehicle according to this embodiment of this application, the electric assembly according to the embodiment of the first aspect of this application is used, where the electric assembly has advantages such as a compact structure and a good cooling effect.

The additional aspects and advantages of this application will be provided in the following description, and some of the additional aspects and advantages will become clear in the following description or be understood through practice of this application.

### BRIEF DESCRIPTION OF THE DRAWINGS

The foregoing and/or additional aspects and advantages of this application become obvious and easily understood in descriptions of the embodiments with reference to the following accompanying drawings.
FIG. 1 is a schematic structural diagram of an electric assembly according to an embodiment of this application;
FIG. 2 is a local cross-sectional view of an electric assembly according to an embodiment of this application;
FIG. 3 is an enlarged diagram of a location D in FIG. 2;
FIG. 4 is an exploded view of an electric assembly according to an embodiment of this application;
FIG. 5 is an exploded view of a box assembly of an electric assembly according to an embodiment of this application;
FIG. 6 is a schematic local structural diagram of an electric assembly according to an embodiment of this application;
FIG. 7 is a local cross-sectional view of an electric assembly according to an embodiment of this application;
FIG. 8 is a local cross-sectional view of an electric assembly according to another embodiment of this application;
FIG. 9 is a schematic structural diagram of an electric assembly according to an embodiment of this application;
FIG. 10 is a schematic structural diagram of an electric assembly according to an embodiment of this application;
FIG. 11 is a schematic local structural diagram of an electric assembly according to another embodiment of this application; and
FIG. 12 is a schematic local structural diagram of an electric assembly according to another embodiment of this application; and
FIG. 13 is a schematic local structural diagram of an electric assembly according to another embodiment of this application; and
FIG. 14 is a schematic local structural diagram of an electric assembly according to another embodiment of this application; and
FIG. 15 is a schematic local structural diagram of an electric assembly according to another embodiment of this application; and
FIG. 16 is a schematic local structural diagram of an electric assembly according to another embodiment of this application;
FIG. 17 is an enlarged diagram of a location A in FIG. 15;
FIG. 18 is an exploded view of an electric assembly according to an embodiment of this application; and
FIG. 19 is a schematic structural diagram of a vehicle according to an embodiment of this application.

Reference numerals of the accompanying drawing: electric assembly 1; box assembly 100; transmission box 101; motor box 102; motor holding cavity 110; transmission holding cavity 120; mounting plate 160; strip-shaped rib 161; cavity 162; annular rib 163; motor 200; transmission 400; front box 180; rear box 190; motor housing 140; motor backend cover 150; motor frontend cover 170; first connection rib 181; second connection rib 182; third connection rib 183; controller 500; conductive sheet 20; conductive member 10; positioning insert 206; motor body 203; leading wire 2031; connection device 204; supporting plate 205; leading wire 2031; motor connection end 2212; shaft via-hole 130; reinforcing rib 141; motor shaft 210; outer spline 211; main shaft 300; shaft hole 310; inner spline 311; oil baffle 320; oil storage cavity 330; seal retainer ring 340; air vent 350; first gear 410; second gear 420; third gear 430; differential assembly 440; transmission shaft 450; first bearing 510; second bearing 520; third bearing 530; fourth bearing 540; vehicle 11.

### DETAILED DESCRIPTION

The following describes embodiments of this application in detail. Examples of the embodiments are shown in the accompanying drawings. The same or similar elements and the elements having same or similar functions are denoted by like reference numerals throughout the descriptions. The following embodiments described with reference to the accompanying drawings are exemplary, and are only intended to describe this application and cannot be construed as a limitation to this application.

An electric assembly 1 according to an embodiment of this application is described below with reference to the accompanying drawings.

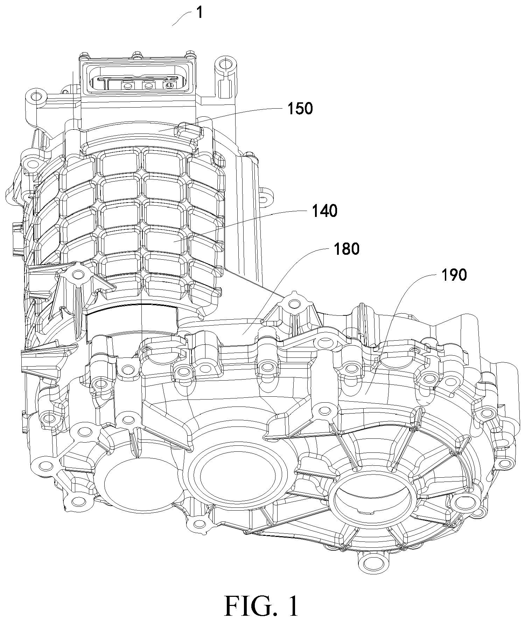

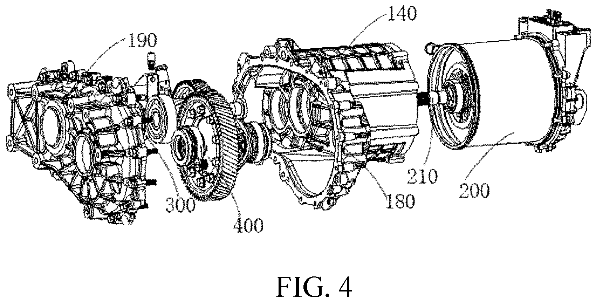

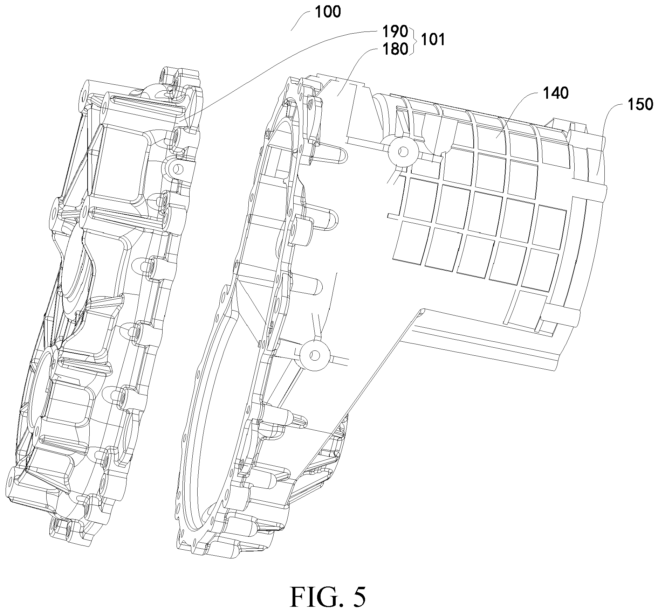

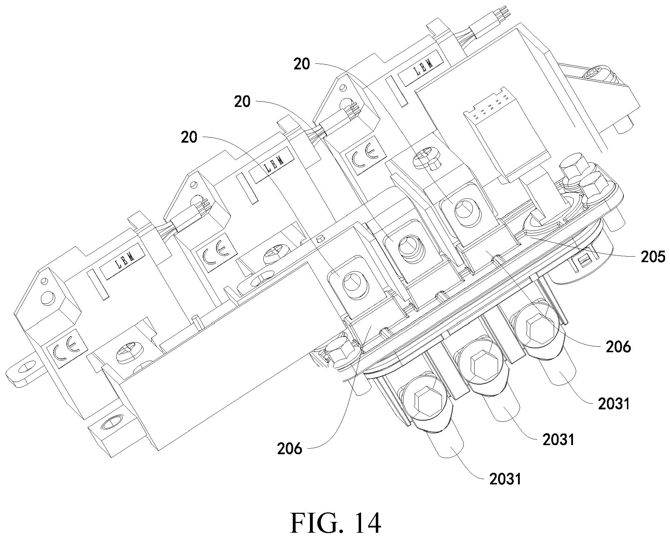

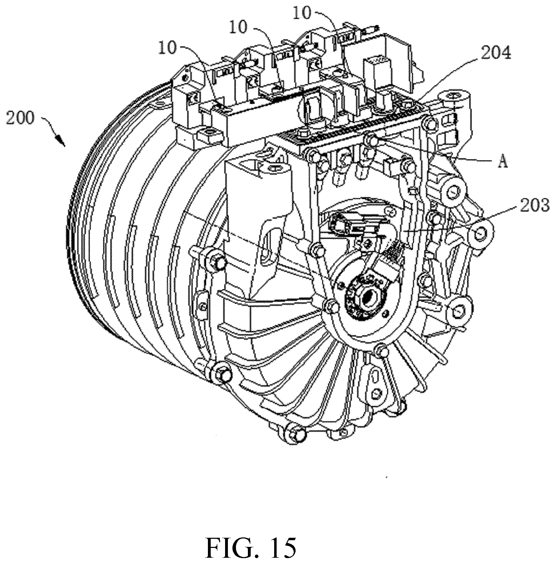

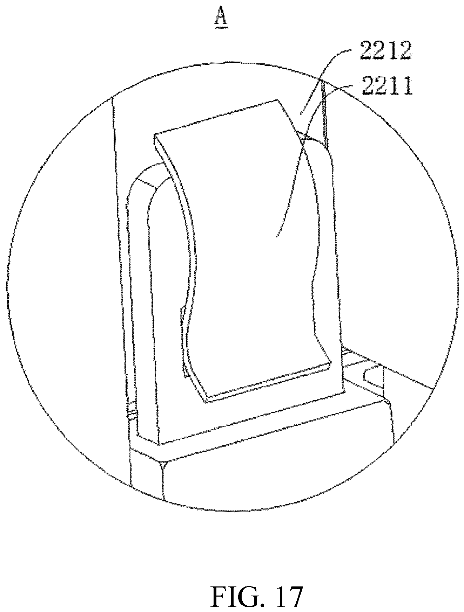

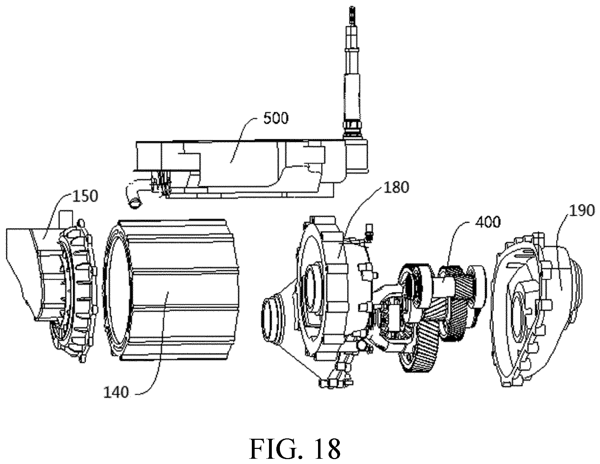

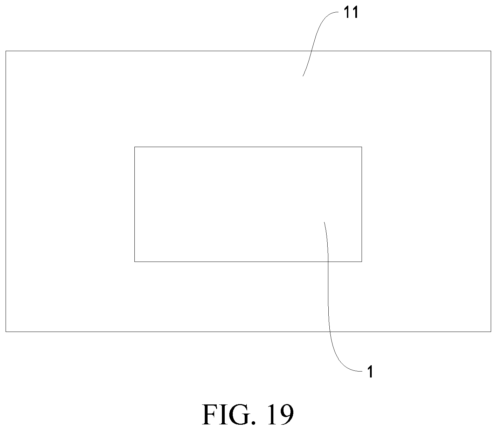

As shown in FIG. 1 to FIG. 19, the electric assembly 1 according to this embodiment of this application includes a box assembly 100, a motor 200, a transmission 400 and a cooling device.

An mounting plate 160 is disposed in the box assembly 100, and the mounting plate 160 divides a space within the box assembly 100 into a motor holding cavity 110 and a transmission holding cavity 120 that are arranged along an axial direction of a motor shaft 210. The motor 200 is disposed in the motor holding cavity 110. The transmission 400 is disposed in the transmission holding cavity 120, and the motor 200 is power-coupled to the transmission 400. The cooling device is disposed in the motor holding cavity 110 and cools the box assembly 100.

In the electric assembly 1 according to this embodiment of this application, the motor 200 and the transmission 400 are disposed in the box assembly 100. Compared with the motor assembly in the related art in which the front box of the transmission and the frontend cover of the motor are connected, the motor 200 and the transmission 400 share a box assembly 100, to implement the integrated design of the electric assembly 1, which not only may leave out a structure in which a plurality of box assemblies 100 are disposed, but also may leave out a bolt required to connect the motor assembly and the transmission assembly, so as to simplify the structure of the electric assembly 1, reduce the part quantity of the electric assembly 1, improve the integration level of the electric assembly 1, and improve the production efficiency of the electric assembly 1.

Moreover, the motor 200 and the transmission 400 share a box assembly 100. Compared with the related art in which the motor assembly and the transmission assembly are individually disposed, space may be saved, to help shorten an axial distance of the electric assembly 1, so that the structure of the electric assembly 1 is compact and proper, thereby improving the space utilization of the electric assembly 1, and facilitating the disposition of the electric assembly 1; and facilitating mounting and repair of the electric assembly 1, and helping improve reliability and stability of the electric assembly 1.

Moreover, the motor 200 and the transmission 400 share a box assembly 100, and therefore components used for integration of the motor 200 and the transmission 400 may be reduced, thereby helping reduce the weight of the electric assembly 1. For example, when the electric assembly 1 is applied to a vehicle 11, the entire weight of the vehicle 11 may be reduced, thereby helping reduce costs of the vehicle 11, reducing the energy loss of the vehicle 11, improving the operating efficiency of the vehicle 11, and improving the endurance capability of the vehicle 11.

Moreover, the box assembly 100 is disposed, the mounting plate 160 is disposed in the box assembly 100, and clamping needs to be performed only once during assembly, to facilitate assembly and forming of the electric assembly 1, help reduce the error of the electric assembly 1, facilitate mounting and disposition of the motor 200 and the transmission 400, help improve coaxiality and radial mounting accuracy of the motor 200 and the transmission 400, and help improve the operating performance of the electric assembly 1.

Further, the cooling device is disposed in the motor holding cavity 110 and cools the box assembly 100. In this way, the motor 200 may be cooled by using the cooling device, to help control the temperature range of the motor 200, avoid a case in which the motor 200 is at an excessively high temperature to affect the normal operating of the motor 200 and even damage the motor 200, and ensure the operating reliability and stability of the motor 200. Moreover, the cooling device may cool the box assembly 100 at the same time, so that the temperature range of the box assembly 100 may be controlled to make the box assembly 100 stably run within a proper temperature range, and the transmission 400 in the box assembly 100 may be further cooled through the box assembly 100, thereby helping improve the entire heat dissipation performance of the electric assembly 1 and improve the operating reliability and stability of the electric assembly 1.

Because the cooling device may cool the box assembly 100, and compared with the cooling manner for the electric assembly in the related art, the cooling device not only may cool the motor 200 but also may cool the box assembly 100, the electric assembly 1 may be fully cooled by the cooling device, and the cooling evenness throughout the electric assembly 1 may be improved, to enhance the cooling effect of the electric assembly 1 and improve the cooling reliability of the electric assembly 1.

Therefore, the electric assembly 1 according to this embodiment of this application has advantages such as a compact structure and a good cooling effect.

An electric assembly 1 according to a specific embodiment of this application is described below with reference to the accompanying drawings.

In some specific embodiments of this application, as shown in FIG. 1 to FIG. 19, the electric assembly 1 according to this embodiment of this application includes a box assembly 100, a motor 200, a transmission 400 and a cooling device.

Specifically, the mounting plate 160 is constructed as a part of the box assembly 100, and the cooling device cools the box assembly 100 through the mounting plate 160. In this way, the disposition of the mounting plate 160 is facilitated, and heat may be transferred through the mounting plate 160, to improve the entire cooling effect of the electric assembly 1. For example, a motor housing 140 and a transmission box 101 may also be cooled. For example, the mounting plate 160 may be cooled through the motor cooling liquid in the motor holding cavity 110, and the box assembly 100 transfers heat through the mounting plate 160, to further cool the housing of the transmission 400, thereby cooling the transmission 400 in the housing of the transmission 400.

According to an embodiment of this application, the mounting plate 160 is constructed as a part of the front box 180, and the cooling device cools the front box 180 through the mounting plate 160, so that the entire box assembly 100 is cooled. For example, the motor cooling liquid in the motor holding cavity 110 may cool the motor 200 and the mounting plate 160 at the same time, and transfer heat through the mounting plate 160. In short, the front box 180 and the transmission 400 may be cooled at the same time through the motor cooling liquid in the motor holding cavity 110.

According to another embodiment of this application, the mounting plate 160 is constructed as a part of the motor housing 140, and because the motor cooling liquid cools the motor housing 140, and may also cool the mounting plate 160 and transfer heat through the mounting plate 160, so that the transmission box 101 may also be cooled, thereby cooling the box assembly 100 and improving the entire cooling effect of the electric assembly 1. In short, the motor cooling liquid passing through the motor 200 may also cool the motor housing 140 and the transmission 400 at the same time.

According to an embodiment of this application, the cooling device is a liquid cooling device, a motor cooling liquid passage is disposed in the motor holding cavity 110, and the liquid cooling device transports cooling liquid to the mounting plate 160 and the motor 200 through the motor cooling liquid passage. Specifically, the liquid cooling device may is a water cooling device. In this way, the motor 200 may be cooled by using the liquid cooling device, and the entire electric assembly 1 is cooled through the mounting plate 160, to ensure reliable heat dissipation of the electric assembly 1, improve the cooling effect of the electric assembly 1, and avoid a case in which the temperature is excessively high to affect the normal operating of the electric assembly 1.

Specifically, a transmission cooling liquid passage is disposed in the transmission holding cavity 120, the transmission cooling liquid passage is in communication with the motor cooling liquid passage, and the transmission cooling liquid passage transports the cooling liquid to the transmission 400. In this way, the motor 200 and the transmission 400 may be cooled by using the liquid cooling device at the same time, to further improve the entire cooling effect of the electric assembly 1, improve the heat dissipation performance of the electric assembly 1, further improve the cooling effect of the electric assembly 1, and ensure the operating reliability and stability of the electric assembly 1.

More specifically, a cooling lubricating liquid may be disposed in the housing of the transmission 400, the housing of the transmission 400 is sleeved over the periphery of the transmission 400, so as to have cooling and heat dissipation effects on the transmission 400, and the mounting plate 160 is disposed on a side of an end of the transmission 400, to mainly perform cooling and heat dissipation on the end of the transmission 400. The two cooling manners have respective focuses, to jointly achieve a full cooling effect on the transmission 400. On the other hand, the transmission 400 is cooled through the motor cooling liquid of the motor 200, and meanwhile the lubricating cooling liquid of the transmission 400 cools the motor 200. The cooling manners have respective focuses, to reinforce the cooling effect on the electric assembly 1 through a combination of the two, thereby jointly achieving a full cooling effect on the electric assembly 1.

According to another embodiment of this application, the cooling device is a blower, the blower is disposed in the motor holding cavity 110, and the blower performs air supply on the mounting plate 160 and the motor 200. In this way, air cooling and heat dissipation may be performed on the mounting plate 160 and the motor 200 by using the blower, to help improve the heat dissipation effect of the electric assembly 1.

Optionally, a distance between the motor 200 and the mounting plate 160 is less than a preset distance. It should be understood herein that, the preset distance is a maximum distance making the mounting plate 160 cool the motor 200, and a person skilled in the art may learn the preset distance through the rated voltage and rated current of the electric assembly 1. For example, the distance between the motor 200 and the mounting plate 160 may be less than 10 millimeters, and is preferably 7.5 millimeters. Because the preset value may be set to a relatively small value, the distance between the motor 200 and the mounting plate 160 is very small. In this way, the motor 200 and the mounting plate 160 may be cooled at a short distance between each other, and after the mounting plate 160 is cooled, the motor 200 can be quickly cooled.

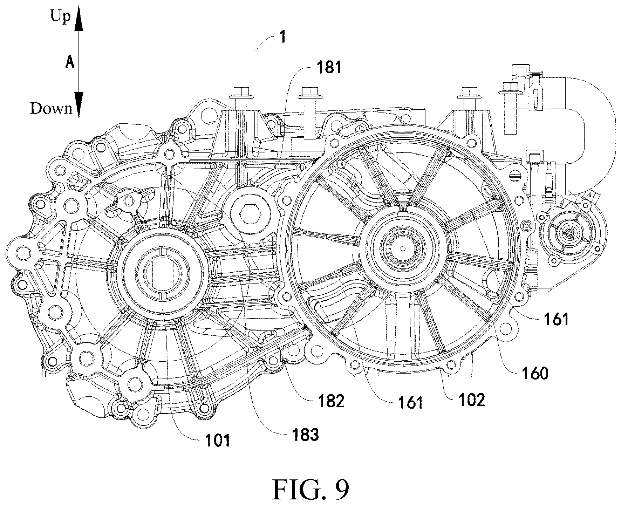

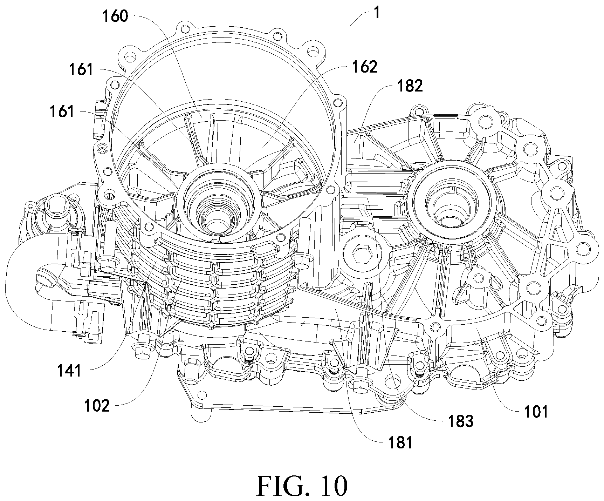

Optionally, as shown in FIG. 9 and FIG. 10, a side of the mounting plate 160 facing the motor 200 and/or the transmission 400 is provided with ribs. Because the ribs enhance the rigidity of the box assembly 100 and improve the natural frequency, resonance may be prevented from occurring in the electric assembly 1, to help reduce the noise of the electric assembly 1. In this way, the contact area between the motor cooling liquid or airflow in the motor 200 and the mounting plate 160 may be increased, so that the cooling device cools the mounting plate 160 more fully.

Specifically, during rotation of the motor 200, a stress is transferred to the box assembly 100 through a bearing, and ribs are added to the box assembly 100, to help increase rigidity and strength of the box assembly 100, prevent the box assembly 100 from being in contact with a coil of the motor 200, prevent components of the motor 200 from being damaged, and further improve operating reliability and stability of the motor 200.

Further, the ribs divide a space between the mounting plate 160 and the motor 200 into a plurality of cavities 162. In this way, forming of the cavities 162 is facilitated, so as to cool the motor 200 by using air passing through the cavities 162.

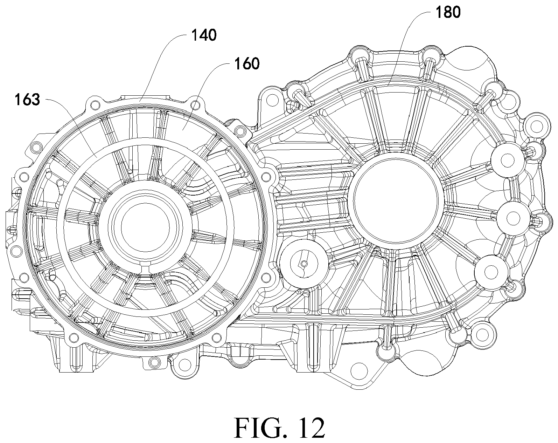

According to an embodiment of this application, as shown in FIG. 12, the ribs include an annular rib 163 extending along a circumferential direction of the motor 200. In this way, rigidity and strength of the box assembly 100 may be improved, the structure stability of the box assembly 100 may be improved, and the heat dissipation capability and the cooling effect of the box assembly 100 may be improved.

According to another embodiment of this application, as shown in FIG. 10, the ribs include strip-shaped ribs 161 extending along a radial direction of the motor 200, there are a plurality of strip-shaped ribs 161 and the plurality of strip-shaped ribs 161 are spaced apart along a circumferential direction of the mounting plate 160. In this way, a more even force may be applied to the box assembly 100, to further help improve rigidity and strength of the box assembly 100, further help improve noise reduction performance and heat dissipation performance of the electric assembly 1, and improve the cooling effect of the electric assembly 1.

According to another embodiment of this application, the ribs include an annular rib 163 extending along a circumferential direction of the motor 200 and strip-shaped ribs 161 extending along a radial direction of the motor 200, there are a plurality of strip-shaped ribs 161 and the plurality of strip-shaped ribs 161 are spaced apart along a circumferential direction of the mounting plate 160. In this way, rigidity and strength of the box assembly 100 along the circumferential direction and the radial direction of the motor 200 may be improved at the same time, thereby improving the structure reliability of the box assembly 100, further improving the heat dissipation area of the box assembly 100, and improving heat dissipation and cooling performance of the electric assembly 1.

Specifically, heights of the strip-shaped ribs 161 relative to the mounting plate 160 gradually decrease from inside to outside. In this way, the disposition space of the strip-shaped ribs 161 may be reduced, to prevent the strip-shaped ribs 161 from occupying excessive space in the box assembly 100, and further facilitate mounting and disposition of the motor 200 and the transmission 400. On the other hand, the heights of the strip-shaped ribs 161 relative to the mounting plate 160 gradually decrease from inside to outside, and the center has a largest height, and may bear a high strength load formed by a bearing on the box assembly 100.

According to an embodiment of this application, the box assembly 100 includes a transmission box 101 and a motor box 102, the transmission box 101 includes a front box 180 and a rear box 190, the motor box 102 includes a motor housing 140 and a motor backend cover 150, the front box 180 and the motor housing 140 are disposed adjacent to each other, and the mounting plate 160 is constructed as a part of the front box 180 or a part of the motor housing 140. In this way, it is convenient for the electric assembly 1 to become a three-segment structure, forming of the transmission holding cavity 120 and the motor holding cavity 110 is facilitated, and mounting and dismounting of the electric assembly 1 are facilitated. Moreover, the mounting plate 160 is a part of the front box 180 or a part of the motor housing 140, and the mounting plate 160 is integrated on the box assembly 100, so that the structure of the box assembly 100 may be made more proper and compact, and the mounting plate 160 may be cooled by the lubricating liquid of the transmission 400, thereby improving the lubricating and cooling effect of the mounting plate 160.

Further, the front box 180 and the motor housing 140 are integrally formed or detachably connected. In this way, the electric assembly 1 may be a three-segment structure, to facilitate the disposition of the motor 200 and the transmission 400.

According to another embodiment of this application, as shown in FIG. 9 and FIG. 10, the box assembly 100 includes a transmission box 101 and a motor box 102, the transmission box 101 includes a front box 180 and a rear box 190, the motor box 102 includes a motor frontend cover 170, a motor housing 140 and a motor backend cover 150, and the mounting plate 160 is constructed as a part of the front box 180 or a part of the motor frontend cover 170. In this way, it is convenient for the electric assembly 1 to become a three-segment structure, forming of the transmission holding cavity 120 and the motor holding cavity 110 is facilitated, and mounting and dismounting of the electric assembly 1 are facilitated. Moreover, the mounting plate 160 is a part of the front box 180 or a part of the motor housing 140, and the mounting plate 160 is integrated on the box assembly 100, so that the structure of the box assembly 100 may be made more proper and compact, and the mounting plate 160 may be cooled by the lubricating liquid of the transmission 400, thereby improving the lubricating and cooling effect of the mounting plate 160.

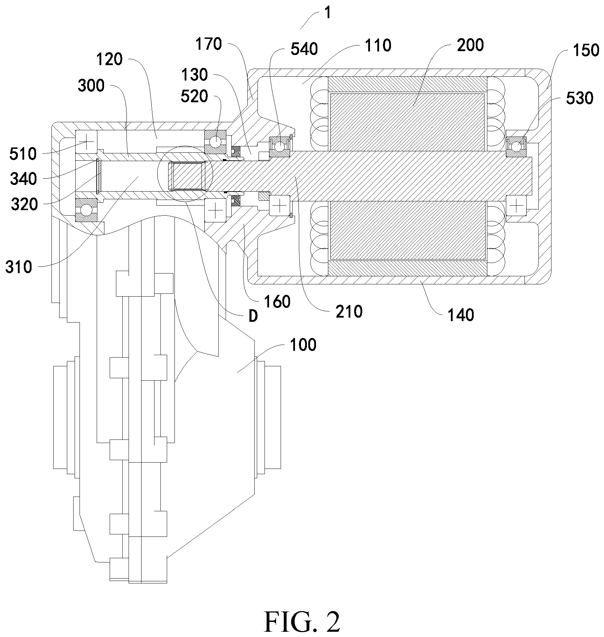

According to an embodiment of this application, as shown in FIG. 2, the motor housing 140, the motor frontend cover 170 and the front box 180 are integrally formed or each two of the motor housing 140, the motor frontend cover 170 and the front box 180 are detachably connected. In this way, the structure flexibility of the box assembly may be improved, to facilitate optimization of the structure of the box assembly 100, facilitate reduction of the weight of the box assembly 100, and improve the endurance capability of the electric assembly 1.

According to another embodiment of this application, the motor frontend cover 170 and the front box 180 are integrally formed, and the motor housing 140 and the motor frontend cover 170 are detachably connected. In this way, simplification of the assembly process of the box assembly 100 is facilitated, thereby improving the assembly efficiency of the box assembly 100.

According to another embodiment of this application, the motor frontend cover 170 and the motor housing 140 are integrally formed, and the motor frontend cover 170 and the front box 180 are detachably connected. In this way, mutual separation between the transmission box 101 and motor box 102 is facilitated, to help improve the structure flexibility of the box assembly 100.

According to another embodiment of this application, the motor housing 140 is connected to the motor frontend cover 170 through a bolt, the motor frontend cover 170 is connected to the front box 180 through a bolt, and the motor housing 140 is connected to the motor backend cover 150 through a bolt. In this way, machining and forming of the motor housing 140, the motor frontend cover 170, the front box 180 and the rear box 190 are facilitated, so as to simplify the forming process. The motor housing 140 the front box 180 the rear box 190 the motor backend cover 150 the motor housing 140 the front box 180 the rear box 190 the motor backend cover 150 the motor housing 140 the front box 180 the motor housing 140. Because each of the motor frontend cover 170, the motor housing 140 and the motor backend cover 150 is detachable, the length of the motor 200 may be adjusted. For example, the length of the motor housing 140 as a standard member may be individually adjusted, thereby improving the structure flexibility and the application range of the motor 200.

Specifically, as shown in FIG. 9, one or more of a first connection rib 181, a second connection rib 182 and a third connection rib 183 are connected between an outer surface of the front box 180 and an outer surface of the motor housing 140, the first connection rib 181 is connected between (an up-down direction is shown by an arrow A in FIG. 9) an upper end face of the motor housing 140 and an upper end face of the front box 180, the second connection rib 182 is connected between a lower end face of the motor housing 140 and a lower end face of the front box 180, and the third connection rib 183 is located between the first connection rib 181 and the second connection rib 182. In this way, the strength of connection between the front box 180 and the motor housing 140 may be reinforced, to avoid a case in which a point with weak strength occurs in a connection location between the front box 180 and the motor housing 140 to cause deformation or damage, thereby improving the entire structure performance of the box assembly 100.

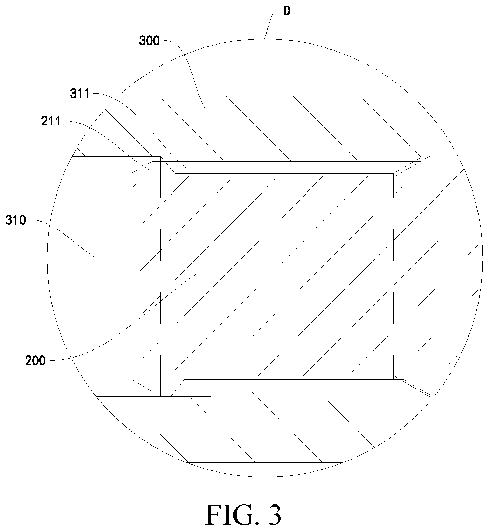

Optionally, as shown in FIG. 3, the transmission 400 includes a main shaft 300, the main shaft 300 is power-coupled to a motor shaft 210 of the motor 200, at least one of the motor shaft 210 and the main shaft 300 is threaded through a shaft via-hole 130 and is connected to the other one, and the main shaft 300 is connected to the motor shaft 210 of the motor 200 through splines. In this way, direct transmission between the motor shaft 210 and the main shaft 300 is facilitated, and an additional transmission structure may be left out, to further simplify the structure of the electric assembly 1, improve the integration level of the electric assembly 1, help transfer power outputted by the motor 200 to the transmission 400 in time, help improve the transmission efficiency of the electric assembly 1, and help improve timeliness and accuracy of power transmission of the electric assembly 1. In this way, the main shaft 300 and the motor shaft 210 may be fixed and positioned by using splines, to prevent relative rotation from occurring between the main shaft 300 and the motor shaft 210, facilitate reliable transmission of the electric assembly 1, and help ensure transmission efficiency of the electric assembly 1. In this way, another structure connecting the main shaft 300 and the motor shaft 210 may be left out, thereby further simplifying the structure of the electric assembly 1, and improving the integration level of the electric assembly 1, and because the main shaft 300 and the motor shaft 210 are sleeved over each other, the shaft spacing of the electric assembly 1 is further shortened, so as to further control the size of the electric assembly 1 in the axial direction of the motor shaft 210.

Further, as shown in FIG. 2, the main shaft 300 is provided with a shaft hole 310, an inner circumferential surface of the shaft hole 310 is provided with inner splines 311, an outer circumferential surface of the motor shaft 210 is provided with outer splines 211, the motor shaft 210 of the motor 200 is matched in the shaft hole 310 and the inner splines 311 match the outer splines 211. In this way, machining of the inner splines 311 is facilitated, to help improve machining precision of the inner splines 311. Through the matching between the inner splines 311 and the outer splines 211, transmission connection between the main shaft 300 and the motor shaft 210 may be implemented, and reliable positioning between the main shaft 300 and the motor shaft 210 may be implemented, to further prevent relative rotation from occurring between the main shaft 300 and the motor shaft 210. Moreover, the motor 200 is a three-segment motor, the main shaft 300 and the motor shaft 210 are sleeved over each other, and the length of the motor 200 may be adjusted according to a requirement, to help change torque and power of the motor 200, and help improve compatibility of the motor 200.

Specifically, the shaft hole 310 runs through the main shaft 300 along an axial direction of the main shaft 300, an oil baffle 320 is matched in the shaft hole 310, the oil baffle 320, an inner circumferential wall of the shaft hole 310 and the motor shaft 210 jointly define an oil storage cavity 330, the oil storage cavity 330 is filled with lubricating oil, and the oil baffle 320 is provided with an air vent 350. In this way, the disposition of the lubricating oil is facilitated, and the lubricating oil in the shaft hole 310 can be effectively prevented from leaking, to play a role of protecting a spline lubricating system. In this way, the main shaft 300 may have an oil storage function, the splines may be lubricated and cooled, the air vent 350 may discharge generated gas at the right time, and the disposition of the shaft hole 310 running through along the axial direction of the main shaft 300 may avoid a case in which gas exists in the shaft hole 310 to affect mounting of the motor shaft 210 and the main shaft 300.

More specifically, a seal retainer ring is matched between the oil baffle 320 and the shaft hole 310 and between the outer circumferential surface of the motor shaft 210 and the inner circumferential surface of the shaft hole 310. In this way, it is convenient to seal the oil storage cavity 330, and the lubricating oil in the oil storage cavity 330 may be prevented from leaking, thereby improving the seal effect of the oil storage cavity 330.

Specifically, as shown in FIG. 2, the electric assembly 1 further includes a plurality of bearings, and the plurality of bearings are respectively sleeved over the motor shaft 210 and the main shaft 300 and are spaced apart along the axial direction of the motor shaft 210 and the main shaft 300. In this way, smooth rotation of the motor shaft 210 and the main shaft 300 is facilitated, to help improve reliability and accuracy of rotation of the motor shaft 210 and the main shaft 300.

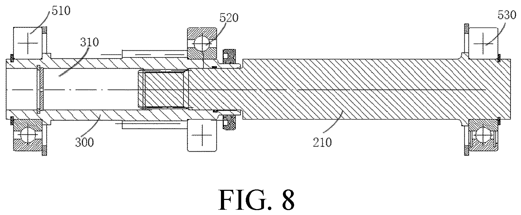

According to an embodiment of this application, as shown in FIG. 8, the plurality of bearings include a first bearing 510, a second bearing 520 and a third bearing 530, the first bearing 510 and the second bearing 520 are respectively disposed adjacent to two ends of the main shaft 300, and the third bearing 530 is disposed adjacent to one end of the motor shaft 210 far away from the main shaft 300. In this way, the disposition of the motor shaft 210 and the main shaft 300 is facilitated, to further facilitate smooth rotation of the motor shaft 210 and the main shaft 300, and the quantity of the bearings may be reduced, to reduce costs of the electric assembly 1.

Specifically, the third bearing 530 is disposed between one end of the motor shaft 210 far away from the transmission 400 and the box assembly 100, the first bearing 510 is disposed between one end of the main shaft 300 far away from the motor 200 and the box assembly 100, and the second bearing 520 is disposed between at least one of one end of the motor 200 close to the main shaft 300 and one end of the main shaft 300 close to the motor shaft 210 and the box assembly 100. In this way, the force applied to the motor shaft 210 and the main shaft 300 may be more balanced, to help improve the operating performance of the electric assembly 1.

Optionally, the second bearing 520 is sleeved over the main shaft 300 and is located on an overlap between the main shaft 300 and the motor shaft 210 in the axial direction. In this way, the second bearing 520 may be used for supporting the main shaft 300 and the motor shaft 210, to ensure the disposition reliability of the main shaft 300 and the motor shaft 210. Because the overlap between the main shaft 300 and the motor shaft 210 in the axial direction is a place on which rotation forms stress concentration, effective supporting of the second bearing 520 may prevent the main shaft 300 and the motor shaft 210 from being broken, thereby improving the operating performance of the main shaft 300 and the motor shaft 210.

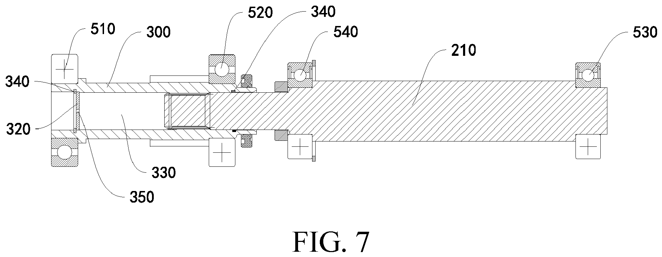

According to another embodiment of this application, as shown in FIG. 7, the electric assembly 1 further includes a fourth bearing 540, where the fourth bearing 540 is sleeved over the motor shaft 210 and is located between the motor shaft 210 and the motor housing. In this way, the fourth bearing 540 may be used for reinforcing supporting on the motor shaft 210, thereby further improving the disposition reliability of the motor shaft 210.

Specifically, the fourth bearing 540 is located between the main shaft 300 and a stator of the motor 200 in the axial direction of the motor shaft 210. In this way, the force applied to the main shaft 300 and the motor 200 may be more even, to help improve reliability and stability of power transfer between the main shaft 300 and the motor 200.

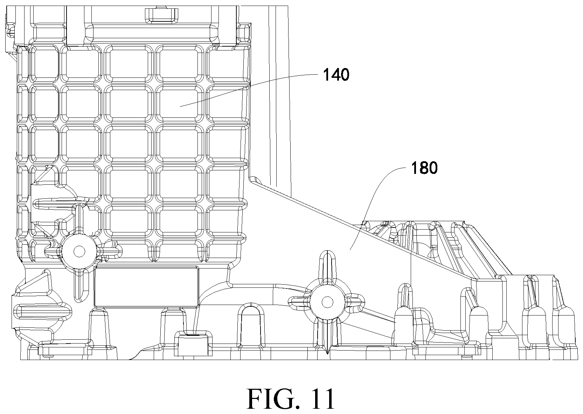

Optionally, as shown in FIG. 11, an outer surface of the motor housing 140 is provided with reinforcing ribs 141 arranged along the outer surface of the motor housing 140. In this way, it is convenient to improve the strength of the motor housing 140, and the surface area of the motor housing 140 may be increased, thereby improving the heat dissipation performance of the motor housing 140.

Specifically, after the motor backend cover 150 is dismounted, the transmission holding cavity 120 may be opened. In this way, it may be convenient to replace and maintain the transmission 400.

Further, an end face of the motor holding cavity 110 far away from one end of the transmission holding cavity 120 may be opened, and after the motor 200 is mounted to the box assembly 100, the motor backend cover 150 covers the motor holding cavity 110.

Optionally, the motor housing 140 and the motor backend cover 150 are mounted through bolts and the front box 180 and the rear box 190 are mounted through bolts. In this way, reliability and stability of the fixed connection between the motor housing 140 and the motor backend cover 150 and between the front box 180 and the rear box 190 may be ensured, and when the electric assembly 1 has a fault, the box assembly 100 may be quickly dismounted, to further facilitate maintenance of the electric assembly 1.

Specifically, as shown in FIG. 2, the first bearing 510 is located on the motor backend cover 150, the second bearing 520 and the fourth bearing 540 are respectively disposed at two ends of the shaft via-hole 130, and the third bearing 530 is located on an end face of the motor holding cavity 110 far away from the transmission holding cavity 120. In this way, the force applied to the main shaft 300 and the motor 200 may be more even, to further help improve the structure stability of the electric assembly 1.

More specifically, the main shaft 300 is provided with a first main shaft positioning slot and a second main shaft positioning slot, the first bearing 510 is matched in the first main shaft positioning slot, and the second bearing 520 is matched in the second main shaft positioning slot. The motor shaft 210 is provided with a third motor shaft positioning slot and a fourth motor shaft positioning slot, the third bearing 530 is matched in the third motor shaft positioning slot, and the fourth bearing 540 is matched in the fourth motor shaft positioning slot. The box assembly 100 is provided with box positioning slots matching the bearings. In this way, the positioning slots may be used for positioning the bearings, to facilitate reliable disposition of the bearings, and help improve location accuracy of the bearings.

Optionally, the electric assembly 1 can be directly mounted to the chassis of the vehicle 11 through a suspension mounting point on the box assembly 100. In this way, mounting of the electric assembly 1 is further facilitated, improvement of the mounting efficiency of the vehicle 11 is facilitated, and the mounting costs of the vehicle 11 are reduced.

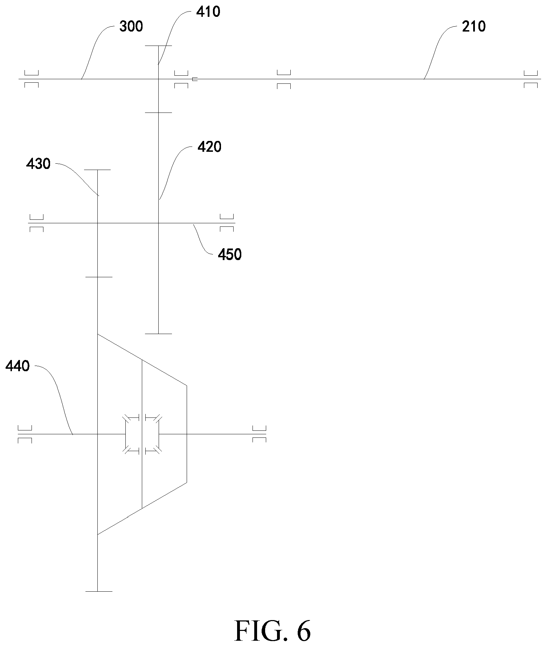

Specifically, as shown in FIG. 6, the transmission 400 includes a differential assembly 440, a first gear 410, a second gear 420, a third gear 430 and a transmission shaft 450, the first gear 410 is sleeved over the main shaft 300, the second gear 420 and the third gear 430 are sleeved over the transmission shaft 450, the first gear 410 is meshed with the second gear 420, and the third gear 430 is meshed with the differential assembly 440. In this way, it is convenient for the transmission 400 to implement speed change transmission.

Optionally, as shown in FIG. 1, the box assembly 100 includes the cylindrical motor housing 140 and the front box assembly 180 of the transmission connected to the motor housing 140, the motor holding cavity 110 is disposed in the motor housing 140, the transmission holding cavity 120 is disposed between the front box 180 and the rear box 190, and the box of the transmission protrudes outward from the outer circumferential surface of the motor housing 140. In this way, it is convenient for the box assembly 100 to protect the electric assembly 1.

Specifically, as shown in FIG. 6, the axial line of the motor shaft 210 is parallel to those of the main shaft 300, the transmission shaft 450 and the differential assembly 440. In this way, it is convenient for the electric assembly 1 to smoothly transfer power.

According to the invention, the electric assembly 1 further includes a controller 500, where the controller 500 is mounted outside the box assembly 100 and fixedly connected to the box assembly 100. In this way, the integral disposition of the controller 500 is facilitated, and an external three-phase line disposed between the controller 500 and the motor 200 may be left out, to facilitate optimization of the structure of the electric assembly 1, reduce costs of the electric assembly 1, prevent mounting of the external three-phase line from affecting the seal effect of the electric assembly 1, prevent electric leakage from occurring in the electric assembly 1, help improve the operating efficiency of the electric assembly 1, improve the anti-interference capability of the electric assembly 1, and reduce the fault rate of the electric assembly 1.

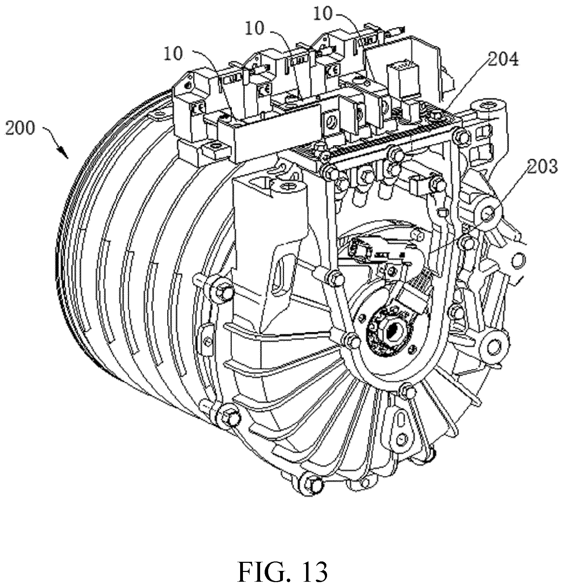

According to an embodiment of this application, as shown in FIG. 13, the electric assembly 1 further includes a conductive sheet 20, where the conductive sheet 20 is configured to connect the controller 500 and the motor 200. For example, the conductive sheet 20 has a controller connection end and a motor connection end, the controller connection end is used for connecting to the controller 500, for example, connecting to a three-phase line of the controller 500, the motor connection end is used for connecting to the motor 200, for example, connecting to a three-phase line of the motor 200, and the conductive sheet 20 is fixed to the controller 500 through a bolt. In this way, external three-phase lines and connection bases may be left out, the length of the three-phase lines is reduced, the connection base structure is left out, and costs are reduced.

Specifically, the motor 200 includes a motor body 203 and a connection device 204, the connection device 204 is mounted on the motor body 203, the motor body 203 has a plurality of leading wires 2031, the connection device 204 includes a plurality of conductive sheets 20, and the plurality of conductive sheets 20 are respectively connected to the corresponding leading wires 2031, where the conductive sheet 20 has a controller connection end, and the controller connection end of the conductive sheet 20 is used for directly connecting to the controller 500.

In other words, the controller 500 is directly connected to the controller connection end at one end of the conductive sheet 20, and the other end of the conductive sheet 20 is connected to the leading wire 2031 of the motor body 203 (the leading wire may be a leading wire of a motor winding). In this way, the controller 500 may control the motor body 203, and the connection between the motor controller 100 and the motor body 203 through the conductive sheet 20 may make the entire structure of the motor 200 more compact.

In some specific embodiments, the connection device 204 further includes a supporting plate 205, the supporting plate 205 is relatively fixedly mounted on the motor body 203, the supporting plate 205 is provided with a positioning insert 206, two ends of the positioning insert 206 respectively stretch out of two opposite side surfaces on the supporting plate 205, a part of the conductive sheet 20 is inserted into the positioning insert 206, and the controller connection end of the conductive sheet 20 stretches out of the positioning insert 206. In other words, the supporting plate 205 is fixedly mounted on the motor body 203, the positioning insert 206 stretches out of two sides of the supporting plate 205, the conductive sheet 20 is inserted into the positioning insert 206, and two ends of the conductive sheet partially stretch out of the positioning insert 206 and are used for respectively connecting to the leading wire 2031 and the controller connection end, where the positioning insert 206 provides supporting and positioning for the conductive sheet 20.

Further, the plurality of conductive sheets 20 are disposed side by side and spaced apart from each other. It may be understood that, the plurality of conductive sheets 20 spaced apart from each other may prevent a case of short-circuit or confused connection from occurring.

That is to say, motor connection ends of conductive members 10 are connected to the conductive sheets 20 in a one-to-one correspondence, the conductive member 10 and the conductive sheet 20 are electrically connected, and the conductive member 10 and the conductive sheet 20 are directly connected without a conducting wire or another connection device. In this way, the line of the electric assembly 1 may be shortened, thereby improving the anti-interference capability, and greatly saving the space.

In a specific embodiment, the conductive member 10 and the conductive sheet 20 are in screw connection. The screw connection is self-locking connection, the connection is stable and not easy to be loose, and dismounting is convenient. Certainly, the foregoing embodiment is only schematic, and cannot be understood as a limitation on the protection scope of this application. For example, the conductive member 10 and the conductive sheet 20 may be in insertion connection, sticking connection, welding connection, riveting connection or the like.

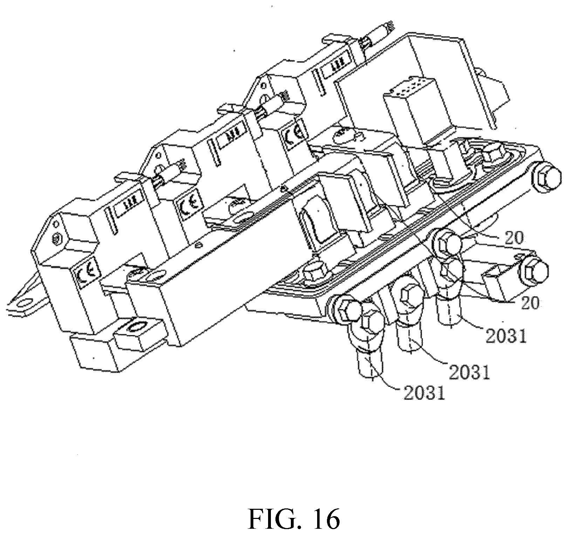

According to another embodiment of this application, as shown in FIG. 16, the electric assembly 1 further includes a conductive sheet 20, where the conductive sheet 20 is stuck in the controller 500 or the conductive sheet 20 is fixed to the controller 500 through a bolt. The conductive sheet 20 has a controller connection end and a motor connection end, the controller connection end is used for connecting to the controller 500, for example, connecting to a three-phase line of the controller 500, the motor connection end is used for connecting to the motor 200, for example, a three-phase line of the motor 200, and the conductive sheet 20 is stuck in the controller 500. In this way, dismounting and mounting of the conductive sheet 20 are facilitated, external three-phase lines and connection bases may be left out, the length of the three-phase lines is reduced, the connection base structure is left out, and costs are reduced.

Specifically, the electric assembly 1 includes a motor 200 and a controller 500. The motor 200 includes a motor body 203 and a connection device 204, the connection device 204 is mounted on the motor body 203, the motor body 203 has a plurality of leading wires 2031, the connection device 204 includes a plurality of conductive sheets 20, and the plurality of conductive sheets 20 are respectively connected to the corresponding leading wires 2031, where the conductive sheet 20 has a controller connection end. The motor controller 100 is mounted on the motor 200, the motor controller 100 has a conductive member 10, and the conductive member 10 has a power supply connection end used for connecting to a power supply and a motor connection end 2212 used for directly connecting to the motor 200, where one of the motor connection end 2212 of the conductive member 10 and the controller connection end of the conductive sheet has an insertion structure and the other one and the insertion structure are in insertion connection.

In other words, the power supply connection end of the conductive member 10 is connected to the power supply, and the motor connection end 2212 of the conductive member 10 and the controller connection end of the conductive sheet 20 are connected. That is to say, the motor controller 100 is directly connected to the controller connection end at one end of the conductive sheet 20, and the other end of the conductive sheet 20 is connected to the leading wire 2031 of the motor body 203 (the leading wire 2031 may be a leading wire of a motor winding). In this way, the motor controller 100 may control the motor body 203, and the connection between the motor controller 100 and the motor body 203 through the conductive sheet 20 may make the entire structure of the motor 200 more compact.

Moreover, the motor connection end 2212 of the conductive member 10 and the conductive sheet 20 of the motor 200 are connected through an insertion structure. It may be understood that, compared with an insulation line wiring manner, the insertion connection manner is simpler, procedures are simplified, and the time is saved. Moreover, when a bumping case is encountered, integrity of the conductive sheet 20 of the motor may be ensured, and occurrence of cases such as bending the conductive sheet 20 and breaking the conductive sheet 20 is reduced.

That is to say, motor connection ends 2212 of conductive members 10 are connected to the conductive sheets 20 in a one-to-one correspondence, the conductive member 10 and the conductive sheet 20 are electrically connected, and the conductive member 10 and the conductive sheet 20 are directly connected without a conducting wire or another connection device. In this way, the line of the electric assembly 1 may be shortened, thereby improving the anti-interference capability, and greatly saving the space.

In some embodiments, the conductive sheet 20 is provided with a stop groove, the insertion structure is provided with a stop protrusion, and the stop protrusion is properly buckled into the stop groove. When the insertion structure and the conductive sheet 20 are connected, the stop protrusion matches the stop groove. In this way, the contact area between an insertion sheet 2211 and the conductive sheet 20 may be increased, and the insertion sheet 2211 may be prevented from transiently departing from the conductive sheet 20 during vibration, to prevent a case of undesired contact from occurring.

A vehicle 11 according to an embodiment of this application is described below. The vehicle 11 according to this embodiment of this application includes the electric assembly 1 according to the foregoing embodiment of this application.

In the vehicle 11 according to this embodiment of this application, the electric assembly 1 according to the foregoing embodiment of this application is used, where the electric assembly has advantages such as a compact structure and a good cooling effect.

Other configurations and operations of the vehicle 11 according to the embodiments of this application are known to those of ordinary skill in the art and will not be described in detail herein.

In the description of this application, it should be understood that, orientations or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing this application and simplifying the description, rather than indicating or implying that the apparatus or element should have a particular orientation or be constructed and operated in a particular orientation, and therefore, should not be construed as a limitation on this application. Moreover, features modified by "first" and "second" may explicitly or implicitly include one or more features. In descriptions of this application, "a plurality of" means two or more, unless otherwise stated.

In the descriptions of this application, it should be noted that, unless otherwise clearly specified and defined, terms such as "mounting", "interconnection", and "connection" shall be understood in a broad sense, for example, may be a fixing connection, a detachable connection, an integral connection, a mechanical connection, an electrical connection, a direct connection, an indirect connection by using an intermediate medium, and communication between interiors of two components. A person of ordinary skill in the art may understand specific meanings of the foregoing terms in this application according to a specific situation.

Although the embodiments of this application have been shown and described, a person skilled in the art can understand that the above embodiments cannot be construed to limit this application.

## Claims

1. An electric assembly (1), comprising:
a box assembly (100), wherein a mounting plate (160) is disposed in the box assembly (100), and
the mounting plate (160) divides a space within the box assembly (100) into a motor holding cavity (110) and a transmission holding cavity (120);
a motor (200), wherein the motor (200) is disposed in the motor holding cavity (110);
a transmission (400), wherein the transmission (400) is disposed in the transmission holding cavity (120), and the motor (200) is power-coupled to the transmission (400); and
a cooling device, wherein the cooling device is disposed in the motor holding cavity (110) and cools the box assembly (100),
**characterized by**
further comprising a controller (500), wherein the controller (500) is mounted outside the box assembly (100) and fixedly connected to the box assembly (100).

2. The electric assembly (1) according to claim 1, wherein the mounting plate (160) is constructed as a part of the box assembly (100), and the cooling device cools the box assembly (100) through the mounting plate (160).

3. The electric assembly (1) according to claim 1 or 2, wherein the cooling device is a liquid cooling device, a motor cooling liquid passage is disposed in the motor holding cavity (110), and the liquid cooling device transports cooling liquid to the mounting plate (160) and the motor ((200) through the motor cooling liquid passage.

4. The electric assembly (1) according to claim 3, wherein a transmission cooling liquid passage is disposed in the transmission holding cavity (120), the transmission cooling liquid passage is in communication with the motor cooling liquid passage, and the transmission cooling liquid passage transports the cooling liquid to the transmission (400).

5. The electric assembly according to claim 2, wherein the cooling device is a blower, the blower is disposed in the motor holding cavity (110), and the blower performs air supply on the mounting plate (160) and the motor (400).

6. The electric assembly according to claim 1, wherein a side of the mounting plate (160) facing the motor (200) or the transmission (400) is provided with ribs;
wherein the ribs preferably divide a space between the mounting plate (160) and the motor (400) into a plurality of cavities, or
wherein the ribs preferably comprise an annular rib (163) extending along a circumferential direction of the motor (400).

7. The electric assembly according to claim 6, wherein the ribs comprise strip-shaped ribs (161) extending along a radial direction of the motor (400), there are a plurality of strip-shaped ribs (161) and the plurality of strip-shaped ribs (161) are spaced apart along a circumferential direction of the mounting plate (160).
wherein heights of the strip-shaped ribs (161) relative to the mounting plate (160) preferably gradually decrease from inside to outside.

8. The electric assembly according to claim 2, wherein the box assembly comprises a transmission box (101) and a motor box (102), the transmission box (101) comprises a front box (180) and a rear box (190), the motor box (180) comprises a motor housing (140) and a motor backend cover (150), the front box (180) and the motor housing (140) are disposed adjacent to each other, and the mounting plate (160) is constructed as a part of the front box (180) or a part of the motor housing (140),
wherein the front box (180) and the motor housing (140) are preferably integrally formed or detachably connected.

9. The electric assembly according to claim 2, wherein the box assembly comprises a transmission box (101) and a motor box (102), the transmission box comprises a front box and a rear box, the motor box comprises a motor frontend cover (170), a motor housing (140) and a motor backend cover (150), and the mounting plate (160) is constructed as a part of the front box (180) or a part of the motor frontend cover (170),
wherein the motor housing (140), the motor frontend cover (170) and the front box (180) are preferably integrally formed or each two of the motor housing, the motor frontend cover (170) and the front box (180) are detachably connected.

10. The electric assembly according to claim 9, wherein the motor frontend cover (170) and the front box (180) are integrally formed, and the motor housing (140) and the motor frontend cover (170) are detachably connected.

11. The electric assembly according to claim 9, wherein the motor frontend cover (170) and the motor housing (140) are integrally formed, and the motor frontend cover (170) and the front box (180) are detachably connected.

12. The electric assembly according to claim 8, wherein one or more of a first connection rib (181), a second connection rib (182) and a third connection rib (183) are connected between an outer surface of the front box (180) and an outer surface of the motor housing, the first connection rib (181) is connected between an upper end face of the motor housing and an upper end face of the front box (180), the second connection rib (182) is connected between a lower end face of the motor housing and a lower end face of the front box (180), and the third connection rib (183) is located between the first connection rib (181) and the second connection rib (182).

13. The electric assembly according to one of the preceding claims,
further comprising a conductive sheet (20), wherein the conductive sheet (20) is configured to connect the controller (500) and the motor (200), or
further comprising a conductive sheet (20), wherein the conductive sheet (20) is stuck in the controller (500) or the conductive sheet (20) is fixed to the controller (500) through a bolt.

14. A vehicle (11), comprising the electric assembly (1) according to any one of claims 1 to 13.

## Patentansprüche

1. Eine elektrische Baugruppe (1), bestehend aus:
eine Gehäusebaugruppe (100), wobei eine Montageplatte (160) in der Gehäusebaugruppe (100) angeordnet ist, und die Montageplatte (160) einen Raum innerhalb der Gehäusebaugruppe (100) in einen Motoraufnahmehohlraum (110) und einen Getriebeaufnahmehohlraum (120) unterteilt;
einen Motor (200), wobei der Motor (200) in dem Motoraufnahmehohlraum (110) angeordnet ist;
ein Getriebe (400), wobei das Getriebe (400) in dem Getriebeaufnahmehohlraum (120) angeordnet ist und der Motor (200) mit dem Getriebe (400) kraftgekoppelt ist; und
eine Kühleinrichtung, wobei die Kühleinrichtung in dem Motoraufnahmehohlraum (110) angeordnet ist und die Gehäusebaugruppe (100) kühlt,
**gekennzeichnet durch**
ferner umfassend eine Steuerung (500), wobei die Steuerung (500) außerhalb der Gehäusebaugruppe (100) angebracht und fest mit der Gehäusebaugruppe (100) verbunden ist.

2. Elektrische Baugruppe (1) nach Anspruch 1, wobei die Montageplatte (160) als Teil der Gehäusebaugruppe (100) ausgebildet ist und die Kühlvorrichtung die Gehäusebaugruppe (100) über die Montageplatte (160) kühlt.

3. Elektrische Baugruppe (1) nach Anspruch 1 oder 2, wobei die Kühleinrichtung eine Flüssigkeitskühleinrichtung ist, ein Motorkühlflüssigkeitsdurchgang in dem Motoraufnahmehohlraum (110) angeordnet ist und die Flüssigkeitskühleinrichtung Kühlflüssigkeit durch den Motorkühlflüssigkeitsdurchgang zu der Montageplatte (160) und dem Motor (200) transportiert.

4. Elektrische Baugruppe (1) nach Anspruch 3, wobei ein Getriebekühlflüssigkeitsdurchgang in dem Getriebeaufnahmehohlraum (120) angeordnet ist, der Getriebekühlflüssigkeitsdurchgang mit dem Motorkühlflüssigkeitsdurchgang in Verbindung steht und der Getriebekühlflüssigkeitsdurchgang die Kühlflüssigkeit zu dem Getriebe (400) transportiert.

5. Elektrische Baugruppe nach Anspruch 2, wobei die Kühlvorrichtung ein Gebläse ist, das Gebläse in dem Motoraufnahmehohlraum (110) angeordnet ist und das Gebläse eine Luftzufuhr auf die Montageplatte (160) und den Motor (400) bewirkt.

6. Elektrische Baugruppe nach Anspruch 1, wobei eine dem Motor (200) oder dem Getriebe (400) zugewandte Seite der Montageplatte (160) mit Rippen versehen ist;
wobei die Rippen vorzugsweise einen Raum zwischen der Montageplatte (160) und dem Motor (400) in eine Vielzahl von Hohlräumen unterteilen, oder
wobei die Rippen vorzugsweise eine ringförmige Rippe (163) umfassen, die sich entlang einer Umfangsrichtung des Motors (400) erstreckt.

7. Elektrische Baugruppe nach Anspruch 6, wobei die Rippen streifenförmige Rippen (161) umfassen, die sich entlang einer radialen Richtung des Motors (400) erstrecken, eine Vielzahl von streifenförmigen Rippen (161) vorhanden ist und die Vielzahl von streifenförmigen Rippen (161) entlang einer Umfangsrichtung der Montageplatte (160) beabstandet sind,
wobei die Höhen der streifenförmigen Rippen (161) in Bezug auf die Montageplatte (160) vorzugsweise von innen nach außen schrittweise abnimmt.

8. Elektrische Baugruppe nach Anspruch 2, wobei die Gehäusebaugruppe eine Getriebebox (101) und eine Motorbox (102) umfasst, die Getriebebox (101) eine vordere Box (180) und eine hintere Box (190) umfasst, die Motorbox (180) ein Motorgehäuse (140) und eine hintere Motorabdeckung (150) umfasst, die vordere Box (180) und das Motorgehäuse (140) benachbart zueinander angeordnet sind und die Montageplatte (160) als Teil der vorderen Box (180) oder als Teil des Motorgehäuses (140) ausgebildet ist,
wobei die vordere Box (180) und das Motorgehäuse (140) vorzugsweise einstückig ausgebildet oder lösbar verbunden sind.

9. Elektrische Baugruppe nach Anspruch 2, wobei die Gehäusebaugruppe eine Getriebebox (101) und eine Motorbox (102) umfasst, die Getriebebox eine vordere Box und eine hintere Box umfasst, die Motorbox eine vordere Motorabdeckung (170), ein Motorgehäuse (140) und eine hintere Motorabdeckung (150) umfasst, und die Montageplatte (160) als Teil der vorderen Box (180) oder als Teil der frontseitigen Motorabdeckung (170) ausgebildet ist,
wobei das Motorgehäuse (140), die vordere Motorabdeckung (170) und die vordere Box (180) vorzugsweise einstückig ausgebildet sind oder jeweils zwei von Motorgehäuse, vordere Motorabdeckung (170) und vordere Box (180) lösbar verbunden sind.

10. Elektrische Baugruppe nach Anspruch 9, wobei die vordere Motorabdeckung bzw. Motorfrontabdeckung (170) und die vordere Box bzw. Frontbox (180) einstückig ausgebildet sind und das Motorgehäuse (140) und die Motorfrontabdeckung (170) lösbar verbunden sind.

11. Elektrische Baugruppe nach Anspruch 9, wobei die Motorfrontabdeckung (170) und das Motorgehäuse (140) einstückig ausgebildet sind und die Motorfrontabdeckung (170) und die Frontbox (180) lösbar verbunden sind.

12. Elektrische Baugruppe nach Anspruch 8, wobei eine oder mehrere von einer ersten Verbindungsrippe (181), einer zweiten Verbindungsrippe (182) und einer dritten Verbindungsrippe (183) zwischen einer Außenfläche der Frontbox (180) und einer Außenfläche des Motorgehäuses verbunden sind, die erste Verbindungsrippe (181) zwischen einer oberen Endfläche des Motorgehäuses und einer oberen Endfläche der Frontbox (180) verbunden ist, die zweite Verbindungsrippe (182) zwischen einer unteren Endfläche des Motorgehäuses und einer unteren Endfläche der Frontbox (180) verbunden ist, und die dritte Verbindungsrippe (183) zwischen der ersten Verbindungsrippe (181) und der zweiten Verbindungsrippe (182) angeordnet ist.

13. Elektrische Baugruppe nach einem der vorhergehenden Ansprüche,
ferner umfassend eine leitfähige Folie (20), wobei die leitfähige Folie (20) so konfiguriert ist, dass sie die Steuerung (500) und den Motor (200) verbindet, oder
ferner eine leitfähige Folie (20) umfasst, wobei die leitfähige Folie (20) in die Steuerung (500) eingeklebt ist oder die leitfähige Folie (20) durch einen Bolzen an der Steuerung (500) befestigt ist.

14. Fahrzeug (11), umfassend die elektrische Baugruppe (1) nach einem der Ansprüche 1 bis 13.

## Revendications

1. Un ensemble électrique (1), comprenant :
un ensemble de boîte (100), dans lequel une plaque de montage (160) est disposée dans l'ensemble de boîte (100), et la plaque de montage (160) divise un espace à l'intérieur de l'ensemble de boîte (100) en une cavité de maintien du moteur (110) et une cavité de maintien de la transmission (120) ;
un moteur (200), le moteur (200) étant disposé dans la cavité de maintien du moteur (110) ;
une transmission (400), dans laquelle la transmission (400) est disposée dans la cavité de maintien de la transmission (120), et le moteur (200) est couplé à la transmission (400) ; et
un dispositif de refroidissement, dans lequel le dispositif de refroidissement est disposé dans la cavité de maintien du moteur (110) et refroidit l'ensemble de boîte (100),
**caractérisé par**
comprenant en outre un contrôleur (500), dans lequel le contrôleur (500) est monté à l'extérieur de l'ensemble de boîte (100) et relié de manière fixe à l'ensemble de boîte (100).

2. L'ensemble électrique (1) selon la revendication 1, dans lequel la plaque de montage (160) fait partie intégrante de l'ensemble de boîte (100), et le dispositif de refroidissement refroidit l'ensemble de boîte (100) à travers la plaque de montage (160).

3. L'ensemble électrique (1) selon la revendication 1 ou 2, dans lequel le dispositif de refroidissement est un dispositif de refroidissement liquide, un passage de liquide de refroidissement du moteur est disposé dans la cavité de maintien du moteur (110), et le dispositif de refroidissement liquide transporte le liquide de refroidissement vers la plaque de montage (160) et le moteur (200) à travers le passage de liquide de refroidissement du moteur.

4. L'ensemble électrique (1) selon la revendication 3, dans lequel un passage de liquide de refroidissement de la transmission est disposé dans la cavité de maintien de la transmission (120), le passage de liquide de refroidissement de la transmission est en communication avec le passage de liquide de refroidissement du moteur, et le passage de liquide de refroidissement de la transmission transporte le liquide de refroidissement vers la transmission (400).

5. L'ensemble électrique selon la revendication 2, dans lequel le dispositif de refroidissement est un ventilateur, le ventilateur est disposé dans la cavité de maintien du moteur (110), et le ventilateur assure l'alimentation en air de la plaque de montage (160) et du moteur (400).

6. L'ensemble électrique selon la revendication 1, dans lequel un côté de la plaque de montage (160) faisant face au moteur (200) ou à la transmission (400) est pourvu de nervures ;
les nervures divisent de préférence l'espace entre la plaque de montage (160) et le moteur (400) en plusieurs cavités, ou
dans lequel les nervures comprennent de préférence une nervure annulaire (163) s'étendant le long de la direction circonférentielle du moteur (400).

7. L'ensemble électrique selon la revendication 6, dans lequel les nervures comprennent des nervures en forme de bande (161) s'étendant le long d'une direction radiale du moteur (400), il y a une pluralité de nervures en forme de bande (161) et la pluralité de nervures en forme de bande (161) sont espacées le long d'une direction circonférentielle de la plaque de montage (160),
dans lequel les hauteurs des nervures en forme de bande (161) par rapport à la plaque de montage (160) diminuent de préférence progressivement de l'intérieur vers l'extérieur.

8. L'ensemble électrique selon la revendication 2, dans lequel l'ensemble de boîte comprend une boîte de transmission (101) et une boîte de moteur (102), la boîte de transmission (101) comprend une boîte avant (180) et une boîte arrière (190), la boîte de moteur (180) comprend un boîtier de moteur (140) et un couvercle arrière de moteur (150), la boîte avant (180) et le boîtier de moteur (140) sont disposés l'un à côté de l'autre, et la plaque de montage (160) est construite comme une partie de la boîte avant (180) ou comme une partie du boîtier de moteur (140),
dans lequel la boîte avant (180) et le boîtier du moteur (140) sont de préférence formés d'un seul tenant ou reliés de manière amovible.

9. L'ensemble électrique selon la revendication 2, dans lequel l'ensemble de boîte comprend une boîte de transmission (101) et une boîte de moteur (102), la boîte de transmission comprend une boîte avant et une boîte arrière, la boîte de moteur comprend un couvercle avant de moteur (170), un boîtier de moteur (140) et un couvercle arrière de moteur (150), et la plaque de montage (160) est construite comme une partie de la boîte avant (180) ou une partie du couvercle avant de moteur (170),
dans lequel le boîtier du moteur (140), le couvercle frontal du moteur (170) et la boîte avant (180) sont de préférence formés d'un seul bloc ou dans lequel le boîtier du moteur, le couvercle frontal du moteur (170) et la boîte avant (180) sont tous deux reliés de manière amovible.

10. L'ensemble électrique selon la revendication 9, dans lequel le couvercle avant du moteur (170) et la boîte avant (180) sont formés intégralement, et le boîtier du moteur (140) et le couvercle avant du moteur (170) sont reliés de manière amovible.

11. L'ensemble électrique selon la revendication 9, dans lequel le couvercle avant du moteur (170) et le boîtier du moteur (140) sont formés d'un seul tenant, et le couvercle avant du moteur (170) et la boîte avant (180) sont reliés de manière amovible.

12. L'ensemble électrique selon la revendication 8, dans lequel une ou plusieurs des premières nervures de connexion (181), des deuxièmes nervures de connexion (182) et des troisièmes nervures de connexion (183) sont reliées entre une surface extérieure de la boîte avant (180) et une surface extérieure du boîtier du moteur, la première nervure de raccordement (181) est reliée entre une face d'extrémité supérieure du boîtier du moteur et une face d'extrémité supérieure de la boîte avant (180), la deuxième nervure de raccordement (182) est reliée entre une face d'extrémité inférieure du boîtier du moteur et une face d'extrémité inférieure de la boîte avant (180), et la troisième nervure de raccordement (183) est située entre la première nervure de raccordement (181) et la deuxième nervure de raccordement (182).

13. L'ensemble électrique selon l'une des revendications précédentes,
comprenant en outre une feuille conductrice (20), dans laquelle la feuille conductrice (20) est configurée pour relier le contrôleur (500) et le moteur (200), ou
comprenant en outre une feuille conductrice (20), dans laquelle la feuille conductrice (20) est collée dans le contrôleur (500) ou la feuille conductrice (20) est fixée au contrôleur (500) par l'intermédiaire d'un boulon.

14. Véhicule (11), comprenant l'ensemble électrique (1) selon l'une quelconque des revendications 1 à 13.
